(19)

**Europäisches Patentamt**

**European Patent Office**

**Office européen des brevets**

(11) **EP 3 762 234 B1**

(12) **EUROPEAN PATENT SPECIFICATION**

(45) Date of publication and mention
of the grant of the patent:
**08.07.2026 Bulletin 2026/28**

(21) Application number: **18712425.0**

(22) Date of filing: **09.03.2018**

(51) International Patent Classification (IPC):
**B41F 31/26** *(2006.01)* **B41N 7/06** *(2006.01)*
**B23K 26/08** *(2014.01)* **B23K 26/082** *(2014.01)*

(52) Cooperative Patent Classification (CPC):
**B41F 31/26; B23K 26/364**

(86) International application number:
**PCT/NL2018/050146**

(87) International publication number:
**WO 2019/172748 (12.09.2019 Gazette 2019/37)**

(54) **ANILOX ROLL, METHOD AND APPARATUS**

ANILOX ROLLE, VERFAHREN UND VORRICHTUNG

ROULEAU ANILOX, PROCÉDÉ ET DISPOSITIF

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**13.01.2021 Bulletin 2021/02**

(73) Proprietor: **Apex Europe B.V.
5527 AK Hapert (NL)**

(72) Inventors:
• **HENDRIKS, Martinus Adrianus
5527 AK Hapert (NL)**
• **VAN STEENSEL, Antonius Petrus
5527 AK Hapert (NL)**

(74) Representative: **Nederlandsch Octrooibureau
P.O. Box 29720
2502 LS The Hague (NL)**

(56) References cited:
**EP-B1- 0 644 829 WO-A2-2009/082225**

**Description**

**Field of the invention**

The present invention relates to an apparatus for printing. More specifically, the present invention relates to an apparatus for flexographic printing. Even more specifically, the present invention relates to an apparatus of an anilox roll, the making of an anilox roll, and the using of an anilox roll.

**Background art**

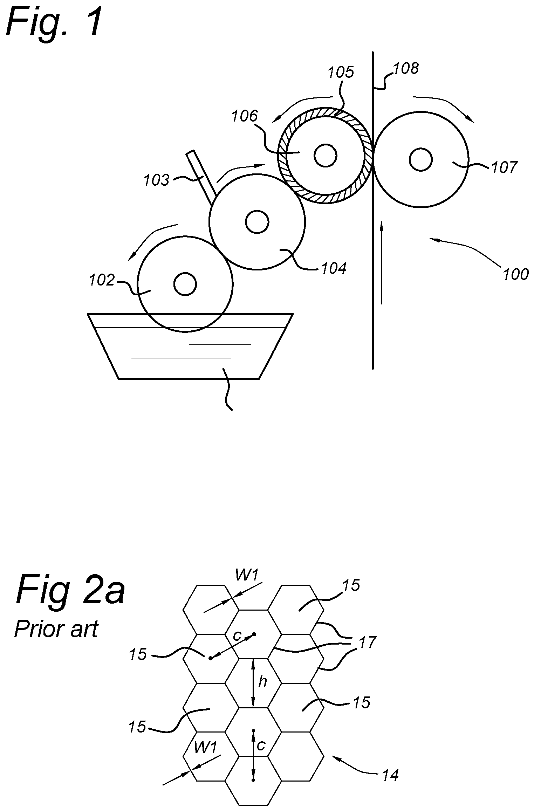

A section view of a typical flexographic printing process/apparatus is shown in Fig. 1. A typical flexographic printing process/apparatus 100 comprises an ink fountain 101, a fountain roll/cylinder 102, a metering system 103 and 104, a printing plate/form 105 comprising a pattern to be printed, a plate cylinder (or printing roll/cylinder) 106 to which the printing plate 105 is attached, an impression cylinder 107 and a substrate 108 to which the pattern is to be printed. Printing plate 105 may be omitted in which case the pattern to be printed is provided on the outer surface of the cylinder 106.

The ink fountain 101 comprises a certain amount of ink. Its viscosity depends on the required application, as persons skilled in the art would know. The fountain roll 102 loads the ink from the ink fountain 101 and supplies the loaded ink to the printing form 105. Before the loaded ink is supplied to the printing form 105, a metering system 103 and 104 may be used. The metering system may comprise a blade 103 and an anilox roll 104. The main purpose of the metering system 103 and 104 is to provide a desired amount of ink evenly or unevenly to the printing form 105 or the printing roll 106 in dependence on the pattern on the surface of the printing form 105 or the printing roll 106. The anilox roll should be able to distribute any amount and local distribution of ink to the printing form 105 or printing roll 106 in dependence on the pattern to be printed. To that effect, the anilox surface pattern should be uniform across its entire effective surface.

The blade 103 is used to scrape off superfluous ink from the surface of the anilox roll 104 such as to evenly distribute the ink along the anilox roll's surface. The anilox roll 104 comprises a certain surface pattern including, e.g., cells or channels, designed to receive the ink from the fountain roll 102 or directly from the sink 101, distribute the ink over the anilox roll 104 and further transfer the ink to the printing form 105. This surface pattern may have small cells or one or more channels extending along the circumferential direction of the anilox roll 104, as is e.g. explained in WO09082225. The printing form 105 and/or the printing roll 106 comprises a printing pattern to be printed on the substrate 108 (e.g., paper, clothes, plastic sheets, etc.). The substrate 108 is placed in between the printing form 105 (or the printing roll 106) and the impression cylinder 107. For multicolour printing, sequential processes as shown in Fig. 1 may be needed, each of which prints at least one colour on the substrate 108.

In fig. 1, the fountain roll 102 and/or the blade 103 may be omitted. The printing from 105 may also be omitted and the printing pattern may be located directly on the surface of the printing roll 106. In the rest of this document, the term printing roll may refer to both a structure comprising both printing form 105 and the printing roll 106 and a structure with only the printing roll 106 (with a printing pattern directly on its surface).

More generally with respect to anilox rolls, anilox rolls have been used in flexographic methods in the printing industry. This printing method was used generally for printing different substrates, such as papers, labels, tape, (plastic) bags and boxes. Anilox rolls can be used in printing methods other than flexographic methods. Also offset printing and intaglio. An anilox roll is used in these other methods for transferring ink in precise and constant amounts.

An anilox roll comprises a generally hard cylinder, having a core of steel or aluminium. On top of the core a thin layer of ceramics is provided. In the thin layer usually small ink cells, hereafter cells, are engraved. In a known embodiment cells are formed having a hexagonal or honeycomb pattern on the surface of the anilox roll. The cells have a volume for receiving ink as a function of the size of the cell and depth of the cell. Patterns and cells on the surface of the anilox roll can be formed using a laser by performing a laser engraving method. The method can comprise a continuous or pulsating laser. The laser is directed onto the surface of the anilox roll forming a laser spot and the laser spot will engrave a pattern onto the surface. The intensity of the laser is sufficient for locally vaporising the material of the outer layer of the anilox roll, for example chromium oxide. This will form a cell. A cell comprises a local recess in the surface of the roll surrounded by cell walls. A single cell wall can be a wall for two adjacent cells, separating the cells.

An anilox roll is mounted by bearings in a printing apparatus such as a flexographic apparatus shown in Fig. 1. The anilox roll comprises longitudinal ends of the cylinder that can be mounted onto a frame of the printing apparatus. The anilox roll is releasably mounted in order to allow cleaning or rapid changing. The anilox roll can rotate around its longitudinal axis in a circumferential direction.

The rotating anilox roll can be partially emerged in a ink fountain (e.g., 101 in fig. 1) or a fountain roll (e.g., 102 in fig. 1) is partially emerged in an ink fountain (e.g., 101 in fig. 1), said screen roll being in contact with the anilox roll for transferring the ink onto the anilox roll and into the cells. In operation the printing apparatus comprising the anilox roll will operate to transfer ink onto the surface of the anilox roll and the surface structure is arranged for retaining the ink on and in the surface. The ink is viscous. A blade (e.g., 103 in fig. 1) may be used to scrape surplus of ink from the anilox roll or the ink roll. Ink will remain in the cells formed on the surface of the anilox roll.

In operation the anilox roll will rotate and the surface of the anilox roll will contact a rotatable printing roll (e.g., the printing roll 106 with printing form 105 in fig. 1). In an operational mode of the anilox roll, the printing roll will receive a part of the ink collected on/in the surface of the anilox roll. The amount and local distribution of transferred ink will depend on the image to be printed. The printing roll will transfer the ink in the next step onto the substrate (e.g., 108 in fig. 1).

The desired colour intensity on the substrate is influenced by average thickness of the ink film on the surface of the anilox roll. One important factor influence the thickness of the ink film is the volume of the ink contained in the cells. If the volume of the ink contained in the cells is increased, more ink will be transferred to the printing roll and eventually printed on the substrate, intensifying the resulting colour. Heavy layers of ink (i.e., thick ink films) are formed on the substrate when using anilox rolls with cells having a relatively large volume (i.e., can contain a large volume of ink), transferring relatively large ink droplets, while details in printing are obtained using small cells (i.e., containing small ink droplets). A process in which heavy layers of ink are required is also called "full-tone" in the art whereas a process for printing smaller details with relatively thin layers of ink is called "half-tone" in the art.

The full-tone printing and half-tone printing normally use separate and different anilox rolls in different printing processes, but it is costly. Therefore, a single anilox roll is normally used in a printing process. It is possible that a printing process requires both full-tone and half-one printing in at the same time, e.g., some areas require heavy layers of ink (full-tone) but the other areas (half-tone) require less. However, anilox rolls in the prior art cannot provide desired ink for both full-tone and half-tone printing at the same time in one printing process.

More specifically, the density of cells is expressed in lines per centimetre (called line screen). Known line screens for prior art cell-like surface structures are for example 100 - 180 lines per centimetre. Here, line screen with of X lines per centimetre refers to X adjacent cells per cm. The different line screens have specific printing purposes for the similar type of anilox rolls, e.g., the depth of the cells are substantially the same and the cell wall thickness are substantially the same. For example, an anilox roll having 100 lines per centimetre may be well suited for printing heavy layers of ink on a substrate (i.e., full-tone printing) because of large cells. A relatively large volume of ink will be transferred in an operational mode of the anilox roll. Anilox rolls having 180 lines per centimetre will have a high resolution, making them more suitable for printing details on a substrate (e.g., halftone printing) because of small cells. Anilox rolls having a higher line screen will transfer droplets of ink having a relatively smaller volume which will result in transferring less ink in total in this operational mode of the anilox roll. Most prior art anilox rolls having a high line screen are less suitable for printing heavy layers of ink.

In prior art printing methods a balance is to be found between high resolution and colour intensity. A higher line screen can be provided with cells having more depth. This would increase the cell volume. However, in practice using cells of increased depth will result in an increase of ink residue remaining in the cell. Not all ink from the cell will be transferred onto the printing roll. Therefore still the printed substrate may not show the desired colour intensity. Moreover, anilox rolls with cells with increased depth are, therefore, more difficult to clean.

Document WO 2009/082225 A2 discloses an anilox roll for a printing apparatus. The anilox roll comprises a cylinder having a surface. The surface comprises a fluid distribution structure for receiving, distributing and transferring a fluid such as an ink. The fluid distribution structure comprises a channel formed in the surface having channel walls. This channel is arranged for distributing the fluid over the fluid distribution structure. The channel comprises channel parts, wherein the courses of connected channel parts are at an angle with respect to each other for preventing a linear distribution of the fluids to be received in a course direction of the channel, allowing a meandering distribution of the fluid to be received in the channel. Side walls of the channel are arranged for allowing a meandering flow of the fluid throughout the fluid distribution surface.

Document EP 0 644 829 B1 discloses a laser engraving head (6) for use in preparing a medium for a printing process that includes a deflector (AOM). The deflector, which may be an acousto-optic modulator, deflects the laser beam which is focused by a lens (L) onto the surface of the medium. The lens (L) may be arranged electronically with respect to the deflected laser beams so that the exit pupil (P) defined by the range of deflected beams is located at the back focal plane of the means for focusing. A number of interchangeable beam expanders (20) may be provided mounted within the head and moveable so that one of the expanders is brought into the path of the beam to provide a desired cell size. Control circuits for the head may modify the control signal applied to the deflector to compensate for variations as a function of deflection angle in the cell size produced on the medium. Where the deflector is formed of a material, such as germanium, which is subject to thermal run-away, then the head may include sampling optics which deflect a portion of the beam upstream of the deflector and a power sensor which receives the deflected beam and is monitored to detect the incidence on the deflector of optical power exceeding a predetermined threshold.

## Summary of the invention

Anilox rolls presently known may not individually meet the criteria that are currently set in the printing industry. Therefore it is necessary in many applications that different anilox rolls with different line screens are used in succession, which is something that slows down the printing process and which makes the printing process labour intensive, time consuming and expensive. Furthermore, the known pattern on anilox rolls may result in uneven distribution of ink or spoil of ink because of gravity or turning of the anilox roll while printing, especially high speed turning of the anilox roll. Moreover, the known pattern on anilox rolls may result in a mist effect when scraping the surplus of ink by a blade, i.e., the ink may be sprayed in the air.

The present invention intends to provide a better anilox roll than the traditional ones, and an easier way to making, forming or engraving anilox rolls. The present invention is according to the claims.

**Brief description of the drawings**

The present invention will be discussed in more detail below, with reference to the attached drawings, in which:

Fig. 1 is a diagram showing a typical flexographic printing process and/or apparatus.
Fig. 2A and 2B show examples of detailed views of a surface of an anilox roll according to the state of the art.
Fig. 3A and 3B are examples of detailed views of a surface portion of an anilox roll according to the state of the art.
Fig. 4 is an example of a detailed view of a surface portion of an anilox roll according to the present invention.
Fig. 5A and 5B are examples of detailed views of a surface portion of an anilox roll according to the present invention.
Fig. 6 is an example of a detailed view of a surface portion of an anilox roll according to the present invention.
Figure 7 is a cross section through the channel like pattern of an anilox roll according to the invention.
Fig. 8 is a diagram showing how to make an anilox roll according to the present invention.

**Description of embodiments**

Embodiments of the present disclosure will be described herein below with reference to the accompanying drawings. However, the embodiments of the present disclosure are not limited to the specific embodiments and should be construed as including all modifications, changes, equivalent devices and methods, and/or alternative embodiments of the present disclosure.

The terms "have," "may have," "include," and "may include" as used herein indicate the presence of corresponding features (for example, elements such as numerical values, functions, operations, or parts), and do not preclude the presence of additional features.

The terms "A or B," "at least one of A or/and B," or "one or more of A or/and B" as used herein include all possible combinations of items enumerated with them. For example, "A or B," "at least one of A and B," or "at least one of A or B" means (1) including at least one A, (2) including at least one B, or (3) including both at least one A and at least one B.

The terms such as "first" and "second" as used herein may modify various elements regardless of an order and/or importance of the corresponding elements, and do not limit the corresponding elements. These terms may be used for the purpose of distinguishing one element from another element. For example, a first element may be referred to as a second element without departing from the scope the present invention, and similarly, a second element may be referred to as a first element.

It will be understood that, when an element (for example, a first element) is "(operatively or communicatively) coupled with/to" or "connected to" another element (for example, a second element), the element may be directly coupled with/to another element, and there may be an intervening element (for example, a third element) between the element and another element. To the contrary, it will be understood that, when an element (for example, a first element) is "directly coupled with/to" or "directly connected to" another element (for example, a second element), there is no intervening element (for example, a third element) between the element and another element.

The expression "configured to (or set to)" as used herein may be used interchangeably with "suitable for," "having the capacity to," "designed to," " adapted to," "made to," or "capable of" according to a context. The term "configured to (set to)" does not necessarily mean "specifically designed to" in a hardware level. Instead, the expression "apparatus configured to..." may mean that the apparatus is "capable of..." along with other devices or parts in a certain context.

The terms used in describing the various embodiments of the present disclosure are for the purpose of describing particular embodiments and are not intended to limit the present disclosure. As used herein, the singular forms are intended to include the plural forms as well, unless the context clearly indicates otherwise. All of the terms used herein including technical or scientific terms have the same meanings as those generally understood by an ordinary skilled person in the related art unless they are defined otherwise. The terms defined in a generally used dictionary should be interpreted as having the same or similar meanings as the contextual meanings of the relevant technology and should not be interpreted as having ideal or exaggerated meanings unless they are clearly defined herein. According to circumstances, even the terms defined in this disclosure should not be interpreted as excluding the embodiments of the present disclosure.

Fig. 2a is an example that shows a detailed view of a surface of an anilox roll 104. The surface structure shown is known from prior art. Fig. 2a only shows a portion of the total surface. The shown structure is present on the complete effective surface, i.e., the surface part that can be used in an actual printing process. The anilox roll 104 is provided with a structure 14, which may be formed of a plurality of regularly positioned closed cells 15. The cells 15 are formed by recesses in the anilox roll 104. The cells 15 are separated from each other by means of side walls 17 having a width w1. According to the state of the art the width w1 may be 3-20 $\mu$m. The side walls ensure that the ink cannot move from one cell to another. If ink is provided onto the surface of the anilox roll 104 having the surface structure 14, side walls 17 will extend above the ink level. Ink will be present in cells 15. Excess ink will be removed by blade 103.

The cells have a global size h, i.e. from one wall to an opposing wall in the order of 3-20 $\mu$m. During use, the surface of an anilox roll is affected by wear. Consequently the walls, which have inclined sides, become thicker over time and the global size h smaller. After a certain period of use, wear has damaged the walls so much that the surface needs to reprocessed. Each cell has a depth (not shown). Each cell has a certain volume. The ink volume corresponds with the ink droplet to be transferred onto the printing roll and the substrate. The cells in Fig. 2a are hexagonally shaped, and the cells are positioned in a honeycomb like structure. However, other shapes of cells are also possible. The distance c between the centre point of two neighbouring cells, wherein the distance is measured perpendicular to the rotating/circumferential direction of the roll, determines the line screen of the anilox roll. Known line screens for prior art cell-like surface structures are 100, 120, 140, 180 lines per cm. The line screens will be discussed in more detail later in this document.

A problem in transferring the ink from the anilox roll onto the printing roll is that ink can remain in this formed cells as shown in Fig. 2a on the surface of the anilox roll. The viscosity of the ink as well as the speed of the printing process can result in ink remaining on the anilox roll. This will affect the printing of the substrate. Furthermore, the cells can function as an air pump bringing air into the ink resulting in foaming of the ink, and said air in the ink will limit transfer of new ink into the cell. The air in the cells should be replaced by ink and a certain amount of time is needed for making such a replacement, limiting the speed of rotation and finally the printing speed.

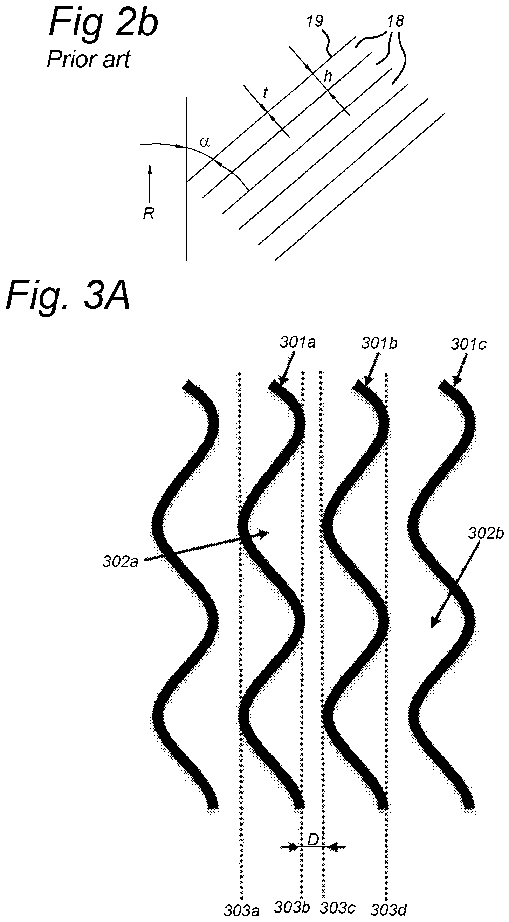

Fig. 2b shows another example of an outer surface of the anilox roll 104 according to the state of the art. In this embodiment channels 18 are applied along an outer surface of the anilox roll. The channels have a width h (15-120 $\mu$m) and are separated from each other by means of a wall 19 having a thickness t. The longitudinal direction of the channels is positioned with an angle $\alpha$ with respect to the direction of rotation R of the anilox roll. The angle $\alpha$ is shown in exaggerated form. The channels shown are, in some applications, actually parallel channels portions of a single channel spiralling over the outer surface of the anilox roll from one end of the anilox roll to the other. The angle $\alpha$ depends, then, the width of the channel, the feed on the laser beam, and the width of the walls as will be evident to persons skilled in the art. Alternatively, the channels shown may be part of a surface pattern comprising multiple parallel, spiralling channels. Such an embodiment is suitable for applying ink to the substrate in a smooth fashion. It is clear that the channels are designed as straight lines and thus that there is no restriction in the spreading of ink in the channel. Therefore, because of easy free movement of ink in the cells shown in Fig. 2b, the ink may be unevenly distributed or spoiled in the air by gravity or spinning, especially high speed spinning, of the anilox roll.

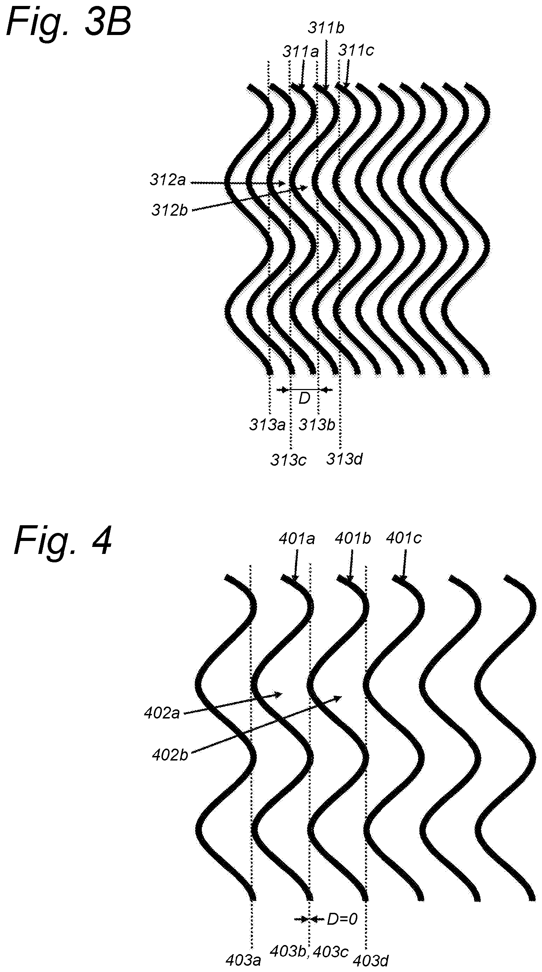

Fig. 3A and 3B are examples of detailed views of a surface of an anilox roll generally known from WO2009/082225.

The anilox roll comprises channels and channel walls on the outer surface of the anilox roll, and the channels and channel walls are in specific patterns meandering and/or wave over the outer surface, e.g. in the form of a sine wave, saw tooth, triangle, or other regular pattern etc. For example as in fig. 3A, three adjacent channel walls 301a, 301b and 301c form two adjacent channels 302a and 302b. Channels 302a and 302b are located on the outer surface of the anilox roll 104 for receiving ink from fountain roll 102 or ink fountain 101 and then transferring the ink to the printing form 105 or printing roll 106. Again, all channels 302a and 302b shown may actually be portions of a single channel spiraling over the outer effective surface of anilox roll 104. In that case, walls 301a and 301b are actually portions of a single wall spiraling over the effective outer anilox surface. Moreover, virtual straight lines 303a and 303c are, then, actually portions of a single virtual straight line spiraling over the effective outer anilox surface. Also, virtual straight lines 303b and 303d are, then, actually portions of a single virtual straight line spiraling over the effective outer anilox surface. The straight virtual lines 303 and 303c will be discussed later in details.

Alternatively, the channels 302a and 302b may be portions of two or more parallel channels spiraling over the outer surface of the anilox roll 104.

In the following description, the terms "left" and "right" are defined relative to a circumferential line perpendicular to the longitudinal axis of the anilox roll. A skilled person should understand the meanings of these terms in the context of this application.

Each of the walls 301a, 301b, 301c in Fig. 3A may be contained in-between of two straight virtual lines with a minimal distance between these two straight virtual lines. The two straight virtual lines are parallel to each other. For example wall 301a is contained in-between of two straight virtual lines 303a and 303b, in which straight virtual line 303a is on the left side of wall 301a and straight virtual line 303b is on the right side of wall 301a. The parallel virtual lines 303a and 303b touch one or more peaks of the wall 301a. Thus, the area between virtual lines 303a and 303b defines the area on the anilox surface in which the wall 301a is located. Stated differently, the minimal distance here means that the distance between the straight virtual lines 303a and 303b is not possible to be smaller when containing the entire wall 301a. I.e., the straight virtual line 303b on the right side of wall 301a has a minimal distance to the wall 301a, or in other words, each of points on wall 301a has a minimal possible distance to straight virtual line 303b (when straight virtual line 303b is on the right side of wall 301a).

It should be understand that the straight virtual lines are located on the outer surface of the anilox roll and follow a spiral on the outer surface, like channels 302a, 302b. The virtual lines are straight when the outer surface of the anilox roll is put on a 2D environment, e.g., unfolded on a flat surface. This interpretation of straight virtual lines should be used to understand the present invention.

Similarly, wall 301b is contained in between of two parallel straight virtual lines 303c and 303d with a minimal distance between these two straight virtual lines, in which line 303c is on the left side of wall 301c and line 303d is on the right side of wall 301b (there is no overlap between 303c and 301b and between 303d and 301b). All virtual lines 303a, 303b, 303c, and 303d are in parallel. The distance between the straight virtual lines 303c and 303d is not possible to be smaller when containing the entire wall 301b. Therefore, the straight virtual line 303c on the left side of wall 301b has a minimal distance to the wall 301b, i.e., each point on wall 301b has a minimal possible distance to straight virtual line 303c (when 303c is on the left side of 301b). The virtual lines 303c and 303d touch one or more peaks of the wall 301b. Thus, the area between virtual lines 303c and 303b defines the area on the anilox surface in which the wall 301b is located. In the situation of Fig. 3A, the area between virtual lines 303a and 303b does not overlap the area between the virtual lines 303c and 303d.

The virtual straight lines can also be described differently from above. For example, channel 302a is limited by two opposing walls 301a and 301b and wall 301a is on the left side of the wall 301b. A virtual straight line 303b is on the right side of wall 301a and with a minimal distance to wall 301a, and wall 301a does not intersect line 303b. And another virtual straight line 303c is on the left side of wall 301b and with a minimal distance to wall 301b, and wall 301b does not intersect line 303c.

In the example of Fig. 3A, line 303c is on the right side of line 303b. Consequently, there is a distance D between the right straight virtual line 303b for wall 301a and the left straight virtual line 303c for wall 301b, and line 303b is on the left side of line 303c. In this case, if D is relatively large, when ink is received and filled in channel 302a, there exists a circumferentially free-running part (i.e., between straight virtual lines 303b and 303c) in channel 302a in which the ink can run directly along the course of the channel 302a (i.e., a direction of one of the straight virtual lines 303b and/or 303c). The inventor has found out that, if this circumferentially free-running part between lines 303b and 303c is too wide, it may be disadvantageous in some scenarios. For example, because of the possibility of free circumferentially movement of the ink in this part between line 303b and 303c, the ink may be spoiled in the air when the anilox is turning, or at least uneven distribution of ink on the surface of the anilox roll may be caused, which may lead to undesired printing results. With a certain ink viscosity, this disadvantage may be more severe when the turning speed of the anilox roll is high, i.e., a high the tangential speed, which depends on the rotation speed (round per min) and the diameter of the anilox roll.

In the above description for Fig. 3A, the left and right straight virtual lines for a wall may be understood as two straight borderlines of the wall, in which one borderline is on the channel side of the wall and the other borderline is on the other side of the wall. For example, in Fig. 3A, there are two straight borderlines 303a and 303b for wall 301a. When considering channel 302a, the straight borderline 303b is on the channel 302a side of wall 301a, and the straight borderline 303a is on the other side of the wall. Similarly, there are two straight borderlines 303c and 303d for wall 301b. When considering channel 302a, the straight borderline 303c is on the channel 302a side of wall 301a, and the straight borderline 303d is on the other side of the wall. Therefore, the above mentioned distance between the two straight virtual lines may be understood as the distance between the two straight borderlines each of which is on the channel side of a wall, when the two adjacent walls form the channel. In the case of Fig. 3A, the straight border line 303c does not overlap with the wall 301a, and/or the straight borderline 303b does not overlap with the wall 301b. In this case, a relative wide channel 302a is formed by the two walls 301a and 301b.

Fig. 3B shows another known, sine wave pattern of channels and walls on the outer surface of an anilox roll. For example, in this pattern, three adjacent walls 311a, 311b and 311c form two channels 312a and 312b. The channels 312a and 312b may be (much) narrower than the channels 302a and 302b in Fig. 3A. More specifically, similar as in Fig. 3A, in Fig. 3B two straight virtual lines 313a and 313b contain wall 311a in-between with a minimal distance between virtual lines 313a and 313b, in which virtual line 313a is on the left side of wall 311a and virtual line 313b is on the right side of wall 311a (there is no overlap between virtual line 313a and wall 311a and between virtual line 313b and wall 311a). The virtual lines 313a and 313b are parallel to each other and touch one or more peaks of the wall 311a. Thus, the area between virtual lines 313a and 313b defines the area on the anilox surface in which the wall 311a is located.

Two straight virtual lines 313c and 313d contain wall 311b in-between with a minimal distance between virtual lines 313c and 313d, in which line 313c is on the left side of wall 311b and line 313d is on the right side of wall 311b (there is no overlap between 313c and 311b and between 313d and 311b). I.e., similar to the virtual lines in Fig. 3A, straight virtual line 313b is on the right side of wall 311a with a minimal distance, and straight virtual line 313c is on the left side of wall 311b with a minimal distance. The virtual lines 313c and 313d are parallel to each other and touch one or more peaks of the wall 311b. Thus, the area between virtual lines 313c and 313d defines the area on the anilox surface in which the wall 311b is located. In the situation of Fig. 3B, the area between virtual lines 313a and 313b overlaps the area between the virtual lines 313c and 313d.

The virtual straight lines can also be described differently from above. For example, there are two walls 311a and 311b, and wall 311a is on the left side of the wall 311b. A virtual straight line 313b is on the right side of wall 311a (without overlap) and with a minimal distance to wall 311a. And another virtual straight line 313c is on the left side of wall 311b (without overlap) and with a minimal distance to wall 311b.

All virtual straight lines 313a, 313b, 313c, and 313d are parallel to one another and are spiraling over the anilox roll surface when the pattern shown in Fig. 3B is also spiraling over the anilox roll surface.

Again, all channels 312a and 312b shown may actually be portions of a single channel spiraling over the outer effective surface of anilox roll 104. In that case, walls 311a and 311b are actually portions of a single wall spiraling over the effective outer anilox surface. Moreover, virtual straight lines 313a and 313c are, then, actually portions of a single virtual straight line spiraling over the effective outer anilox surface. Also, virtual straight lines 313b and 313d are, then, actually portions of a single virtual straight line spiraling over the effective outer anilox surface.

Alternatively, the channels 312a and 312b may be portions of two or more parallel channels spiraling over the outer surface of the anilox roll 104.

In the example of Fig. 3B, line 313b is on the right side of line 313c, and there is a distance D between these two lines. Additionally, when D is relatively large, there are some disadvantageous. For example, the ink movement in the channels is difficult because of the free movement of ink being blocked by the walls. Consequently, when blade 103 is used to scrape off superfluous ink from the anilox roll, it may cause a "mist effect", i.e., fine ink droplets are sprayed in the air because the ink cannot be distributed quickly in the channels. With a certain ink viscosity, the mist effect is getting worse in high speed printing because the turning speed of the anilox roll is high, i.e., with a high the tangential speed (surface speed of the anilox), which depends on the rotation speed (round per min) and the diameter of the anilox roll.

In the above description for Fig. 3B, the left and right straight virtual lines for a wall may be understood as two straight borderlines of the wall, in which one borderline is on the channel side of the wall and the other borderline is on the other side of the wall. For example, in Fig. 3B, there are two straight borderlines 313a and 313b for wall 311a. When considering channel 312a, the straight borderline 313b is on the channel 312a side of wall 311a, and the straight borderline 313a is on the other side of the wall. Similarly, there are two straight borderlines 313c and 313d for wall 311b. When considering channel 312a, the straight borderline 313c is on the channel 312a side of wall 311a, and the straight borderline 313d is on the other side of the wall. Therefore, the above mentioned distance between the two straight virtual lines may be understood as the distance between the two straight borderlines each of which is on the channel side of a wall, when the two walls are adjacent and form the channel. In the case of Fig. 3B, the straight border line 311c overlaps with the wall 311a, and/or the straight borderline 311b overlap with the wall 311b. In this case, a very narrow channel 312a is formed by the two walls 311a and 311b.

According to an embodiment of the current invention, a channel and wall pattern of an anilox roll is shown in Fig. 4. In general, the pattern defining the shape of both the channels 402a, 402b and the walls 401a, 401b, 401c, and 401d may be one of a sine wave, saw tooth, triangle pattern, and any other suitable regular repetitive pattern. Preferably, the pattern is spiraling over the anilox roll surface across its entire effective surface area. Adjacent walls at opposing sides of a channel 402a, 402b are, preferably parallel in an in-phase relationship. When the pattern is one of sine wave, saw tooth and triangle, a suitable ratio between the amplitude of the wave pattern and wave length may be in a range of >1/8, preferably >1/2.

Fig. 4 shows three adjacent walls (from left to right) 401a, 401b and 401c forming two adjacent channels (from left to right) 402a and 402b. Two parallel straight virtual lines 403a and 403b contain wall 401a in-between with a minimal distance between 403a and 403b, in which line 403a is on the left side of wall 401a and line 403b is on the right side of wall 401a (there is no overlap between line 403a and wall 401a and between line 403b and wall 401a); Two straight virtual lines 403c and 403d contain wall 401b in-between with a minimal distance between 403c and 403d, in which line 403c is on the left side of wall 401b and line 403d is on the right side of wall 401b (there is no overlap between line 403c and wall 401b and between line 403d and wall 401b). I.e., similar to the virtual lines in Fig. 3A and 3B, straight virtual line 403b is on the right side of wall 401a with a minimal distance, and straight virtual line 403c is on the left side of wall 4011b with a minimal distance. The virtual lines 403a and 403b are parallel to each other and touch one or more peaks of the wall 401a. Thus, the area between virtual lines 403a and 403b defines the area on the anilox surface in which the wall 401a is located. Similarly, The virtual lines 403c and 403d are parallel to each other and touch one or more peaks of the wall 401b. Thus, the area between virtual lines 403c and 403d defines the area on the anilox surface in which the wall 401b is located.

The virtual straight lines can also be described differently from above. For example, channel 402a is limited by two opposing walls 401a and 401b, and wall 401a is on the left side of the wall 401b. A virtual straight line 403b is on the right side of wall 401a (without intersection) and with a minimal distance to wall 401a. And another virtual straight line 403c is on the left side of wall 401b (without intersection) and with a minimal distance to wall 401b.

Again, all channels 402a and 402b shown may actually be portions of a single channel spiraling over the outer effective surface of anilox roll 104. In that case, walls 401a, 401b and 401c are actually portions of a single wall spiraling over the effective outer anilox surface. Moreover, virtual straight lines 403a and 403c are, then, actually portions of a single virtual straight line spiraling over the effective outer anilox surface. Also, virtual straight lines 403b and 403d are, then, actually portions of a single virtual straight line spiraling over the effective outer anilox surface.

Alternatively, the channels 402a and 402b may be portions of two or more parallel channels spiraling over the outer surface of the anilox roll 104.

Different from Fig. 3A or 3B, in Fig. 4, lines 403b and 403c coincide with each other, or substantially coincide. Stated differently, the distance D between lines 403b and 403c equals 0. The inventor has found out that this setup has several advantages. With the pattern in Fig. 4, there does not exist a free-running channel part such as between 303b and 303c in Fig. 3A to allow free movement of the ink alongside the channel. Hence, ink is less likely to be sprayed in the air because of turning of the anilox roll and ink is more likely to be evenly distributed in different parts of channels of the anilox roll. Moreover, with the pattern in Fig. 4, the ink is less blocked by the wall than in Fig. 3B, and, therefore, ink can move more easy in the channels to prevent the above mentioned mist effect and can be distributed in the channels quicker. Depending on the exact wave pattern, i.e. channel width, amplitude of the pattern and wave length of the pattern, a wide range of printing applications can be supported both in the full tone and halftone range. Experiments shows that the pattern Fig. 4 has a very good and balanced performance considering spray of ink and mist effect compared to other patterns under similar circumstances.

In the above description for Fig. 4, the left and right straight virtual lines for a wall may be understood as two straight borderlines of the wall, in which one borderline is on the channel side of the wall and the other borderline is on the other side of the wall. For example, in Fig. 4, there are two straight borderlines 403a and 403b for wall 401a. When considering channel 402a, the straight borderline 403b is on the channel 402a side of wall 401a, and the straight borderline 403a is on the other side of the wall. Similarly, there are two straight borderlines 403c and 403d for wall 401b. When considering channel 402a, the straight borderline 403c is on the channel 402a side of wall 401a, and the straight borderline 403d is on the other side of the wall. Therefore, the above mentioned distance between the two straight virtual lines may be understood as the distance between the two straight borderlines each of which is on the channel side of a wall, when the two walls are adjacent and form the channel. In the case of Fig. 4, the straight border lines 403c and the straight borderline 403b are substantially the same line.

Experiments have shown that the virtual lines/borderlines 403b and 403c do not need to exactly coincide as shown in Fig. 4. Improved performance relative to the general prior art of Figs. 3A and 3B can be achieved when

$$-12\mu m < D < 12\mu m,$$

preferably, $-5\mu m < D < 5\mu m$,
more preferably, $-3\mu m < D < 3\mu m$,
even more preferably, $-2\mu m < D < 2\mu m$, and
most preferably, $D = 0$. (As in Fig. 4.)

Note, that $D > 0$ indicates a situation where line 403c is located right from line 403b and there is still a very tiny straight free flow of ink possible. $D < 0$ indicates a situation where line 403c is located left from line 403b and the area between lines 403a and 403b overlaps the area between lines 403c and 404d: there is no straight free flow of ink possible.

According to embodiments of the current invention, channels on the outer surface of the anilox roll have the same course on the anilox roll outer surface. Also, walls on the outer surface of the anilox roll have the same course. For example, as in Fig. 4, channels 402a and 402b have the same or a similar shape, and the walls 401a, 401b and 401c have the same shape, which is also the same shape as the channels 402a and 402b, i.e., both the walls and channels are in a sine-like shape.

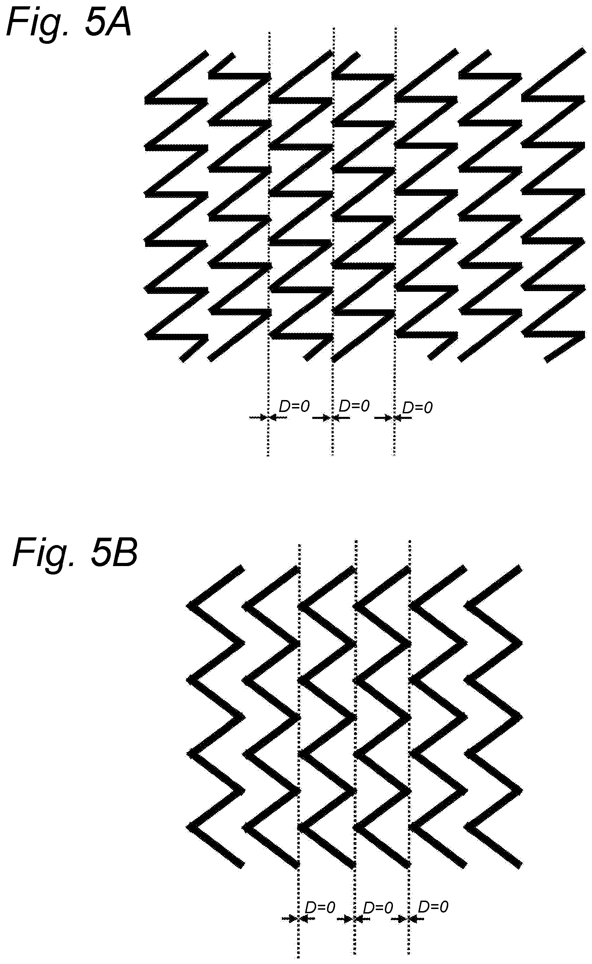

Some other examples are shown in Fig. 5A and 5B, which are alternative examples of the current invention. For example in fig. 5A, the walls have a saw tooth pattern, and the channels have a similar shape. In fig. 5B, the walls and channels have a similar triangle shape. However, the shapes of the walls may be different from the shape of the channels. For example, the channels may be in a shape of connected cells (i.e., similar to a pearl necklace shape), but the walls around the channels may be in a different shape.

According to embodiments of the current invention, channels and/or walls on the outer surface of an anilox roll may have a repetitive pattern, for example the sine-like waves (as in Fig. 3A, 3B and 4), saw tooth shaped waves as in Fig. 5A and triangle shapes as in Fig. 5B. Other receptive shapes of channels and/or walls are also possible, for example, channels formed by connected repetitive cells, in which the cells may have a circular, elliptical, square or other possible shape.

According to embodiments of the current invention, the channels have the same width and/or the walls have the same width. Channels with a same channel width may result in even distribution of ink over the surface of the anilox roll. Wall widths are substantially the same, which may result in substantially the same channel width. The channel width may be larger than the wall width, or smaller than the wall width.

Sizes of the channels and walls, as well as of the value of D of the embodiments of Fig's 5A and 5B may the same as mentioned above with reference to the embodiment of Fig. 4.

According to embodiments of the current invention, each of the channels has a U or V shaped cross section perpendicular to the straight virtual lines (e.g., 403a, 403b, 403c or 403d in Fig.4),. Preferably, the size of the U or V shape, i.e., the width and depth, is uniform for each part of the channels across the entire anilox roll surface. The U or V shape may have a curved or flat bottom. The width of the opening of the U or V shape may be larger than or the same as the width of the bottom.

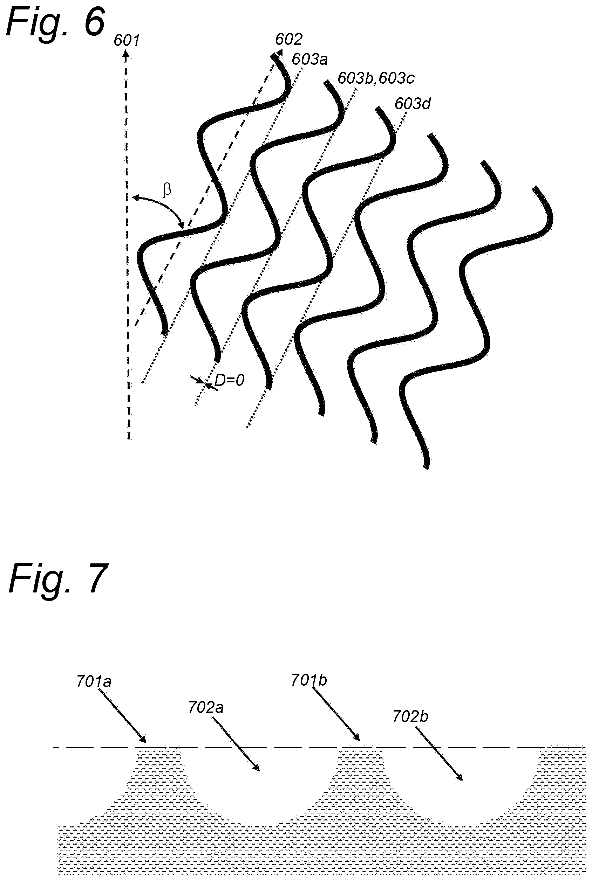

Fig. 7 shows one example, cross sectional view of the walls and channels. Reference numbers 701a and 701b refer to walls and 702a and 702b to channels. As shown in Fig. 7, the wall thickness/width of parts of wall 701a, 701b may vary with the depth from the surface of the anilox roll 104. For example, the thickness of wall 701a, 701b on the surface of the anilox may be smaller than the thickness of the wall 701a, 701b when considering the part of the wall 701a, 701b deeper in the anilox roll 104. I.e., the top of a wall 701a, 701b may be thinner (have a smaller width) than the bottom of the wall. Thus, wall 701a, 701b may have an upside-down U or V cross section shape. Because of the difference of wall width/thickness in the depth direction from the surface of the anilox roll 104, the width/thickness of the wall 701a, 701b may change after being used for a while. I.e., wear down of the anilox roll may increase the width of the walls 701a, 701b on the anilox roll surface. For example, in Fig. 7, after a long time of use the thickness on top of the wall 701a, 701b may increase, consequently, the width of the channel 702a, 702b may decrease, which results in the decreasing of distance D.

According to embodiments of the current invention, the channels are parallel to each other. More preferably, the channels are parallel to each other without phase difference, which may result in channels with the same width as shown in Fig. 4 and Fig. 5B. According to embodiments of the current invention, the walls may be parallel to each other as shown in Figs. 4 and 5A, 5B. More preferably, the walls are parallel to each other without phase difference, which may result in channels with a constant width as shown in Fig. 4 and Fig. 5B.

According to embodiments of the current invention, the channels on the outer surface of an anilox roll may be different parts from one channel or multiple channels. For example, there is only one channel (i.e., a continuous channel) on the surface, which has a spiral shape (or a spring shape) on the surface of the anilox roll (for example, extending with an angle to the circumferential direction of the anilox roll), wherein the central axial of the spiral shape (i.e., the spring shape) is the same as the central axial of the cylinder shaped anilox roll. and parts of this channel / these channels may form the pattern on the surface of the anilox roll as shown in Fig. 3A, 3B, 4, 5A or 5B. Therefore, the patterns may be formed by one continuous channel or by multiple continuous channels.

According to embodiments of the current invention, some virtual straight lines may be parts from one virtual straight line in a spiral shape (i.e., the spring shape) along the axial direction of the anilox roll. For example, the virtual lines 403a, 403b, 403c or 403d in Fig.4 may be parts from one virtual line in a spiral shape (i.e., the spring shape).

According to embodiments of the current invention, a channel, over a length of one round along the circumference of the anilox roll, may contain an integer numbers of repetitive patterns (one pattern being e.g. one sinus, one saw tooth, one triangle, etc.), which will result in parallel channels.

According to embodiments of the current invention, the course of the channels may have an angle $\beta$ to the circumferential direction of the cylinder shaped anilox roll. An example is show in fig. 6, in which line 601 is the circumferential direction of the cylinder shaped anilox roll and line 602 shows the course of the channels. In the embodiment of Fig. 6, the pattern is a sine wave pattern and the course 602 coincides with the center line of the sine wave. The course 602 of the channels is parallel to the straight virtual line 603a and/or 603b, wherein the straight virtual lines 603a and 603b contain a wall in-between with a minimal distance between line 603a and 603b. The angle $\beta$ between the circumferential direction 601 and channel course 602 is larger than 0 but, in most cases, very small. The actual value of angle $\beta$ depends on the number of parallel spiraling channels, the width of the channels, the thickness of the walls and the diameter of the anilox roll 104.

According to embodiments of the current invention, the channels and walls cover the whole effective outer surface of the anilox roll. Preferably, the patterns of the channels and/or the walls are the same or substantially the same over the whole outer surface of the anilox roll.

According to embodiments of the current invention, a printing apparatus (e.g., as in Fig. 1) comprises the anilox roll mentioned in this application. Preferably, the printing apparatus is a flexographic apparatus.

Anilox rolls have two important parameters, i.e., the line screen and the volume. The line screen is normally the number of cells per meter or centimeter, or the number of lines (i.e., walls or channels) per meter or centimeter. For example, with the pattern in Fig. 2b, the line screen can be the number of walls per meter. The volume is the amount of ink contained per square meter or per square inch on the surface of the anilox roll (for example, in a form of an ink film). The commonly used unit for the volume is Billion Cubic Micron (BCM) per square inch (i.e., BCM/inch$^2$, sometimes BCM is directly used as BCM/inch$^2$ in industry) or cubic centimeter per square meter (i.e., cm$^3$/m$^2$, which could be understood as an average ink film thickness on the surface of the anilox roll).

Normally, the line screen value determines how detailed the printing may be. For example, the line screen value determines how thin a line may be when printing, which is a similar concept to the parameter of pixel in computer screens or TVs. The volume value determines how heavy the printing may be, e.g., high color intensity (heavy ink printing), which is a similar concept to the color intensity parameter of computer screens or TVs. Therefore, both parameters are critical in printing industry.

The printing process/operation mode focusing on the detailed printing, e.g., text printing, may be referred to as halftone printing and the printing process/operation mode focusing on large continuous areas may be referred to as full-tone printing in industry. The half-tone printing mode normally requires average thin layers of ink film and the full-tone printing mode normally requires average thick layers of ink film.

Clearly, the line screen and volume (i.e., thickness of the ink film) are not entirely isolated from each other in traditional anilox roll as show in Fig. 2A with cells. For example, a high line screen may result in low ink volume (i.e., small ink droplets contained in the anilox surface and transferred to the printing roll) because of more walls on the surface and shallow cells (small but deep cells are difficult to clean). And a low line screen may result in high ink volume (i.e., large ink droplets contained in the anilox surface and transferred to the printing roll) because of less walls and maybe deeper cells. Some typical values of these two parameters for traditional anilox rolls are summarized in the following table (from table 64 on page 71 in the 2006 edition of text book: "Technik Des Flexodrucks" by Prof. K.-H. Meyer).

Table 1. Traditional line screens and volume

| Parameters | Line screen (per cm) | Volume ($cm^3/m^2$) |
|---|---|---|
| Process | 340 | 4.0 |
| | 320 | 4.0 |
| | 300 | 4.0 |
| | 280 | 4.2 |
| | 260 | 4.4 |
| | 240 | 4.7 |
| Process small text | 220 | 5.1 |
| | 200 | 5.7 |
| | 180 | 6.5 |
| Text/Line solid area | 180 | 7.0 |
| | 160 | 7.4 |
| | 140 | 8.5 |
| | 120 | 9.0 |
| | 100 | 10.5 |
| Strong text Strong Solid area | 120 | 10.4 |
| | 100 | 13.1 |
| | 80 | 15.2 |
| | 70 | 18.2 |
| | 60 | 20 |

As indicated in the above table, it is clear that a traditional/known anilox roll may not be used in different printing scenarios with different requirements (e.g., in a detail/halftone printing process and in a heavy ink/full-tone printing process), or one printing scenario containing different requirements (e.g., in one printing process with detail/halftone printing and heavy ink/full-tone printing at the same time). Therefore, traditionally, multiple anilox rolls are needed for different printing purposes/processes, which is costly. More specifically, one of the problems of known anilox rolls is the fact that an anilox roll normally has a single value of the line screen, therefore, working only for one type of printing. For example, known anilox rolls do not allow printing an image on a substrate wherein the image comprises both heavy ink/full-tone printing and detail/halftone printing at the same time. Replacing an anilox roll is a time consuming and costly process, since printing will be disabled temporarily and different anilox rolls having different line screens are to be provided.

According to embodiments of the current invention, wherein the channels are arranged to be suitable for different operating modes/printing modes, e.g., detail/halftone printing and heavy ink/full-tone printing, i.e., anilox rolls with the pattern described in the current invention (e.g., as shown in figs. 3, 4, 5 and 6) can be used for both printings at the same time.

Because the free movement of the ink is partially limited by meandering walls, the current invention may prevent spoil or uneven distribution of ink, especially when the anilox roll is spinning with a high speed. This ink spoil and uneven distribution of ink (because of gravity and spinning of the anilox roll) cannot be solved by the pattern of Fig. 2B. Additionally, because the free movement of ink is not entirely blocked by the walls in the current invention, it is easy to absorb ink from the ink fountain or the fountain roll and then distribute the ink over the channel/channels all over the surface of the anilox roll. Also, because of easier free movement of ink in the current invention than with the pattern shown in Fig. 3B (especially when D>5$\mu$m), the mist effect is minimized.

According to embodiments of the current invention, each of the channels has a channel width between 5 and 150 $\mu$m, preferably between 10 and 100 $\mu$m, and even more preferably between 20 and 80 $\mu$m. Furthermore, each of the walls has a wall width in a range of 1-10 $\mu$m, preferably between 1-5 $\mu$m and even more preferably between 1-3 $\mu$m.

The invention also relates to a method for forming an anilox roll. The method comprises supplying a cylinder for an anilox roll that has an outer surface to be tooled. The method preferably comprises providing at least a laser source and laser engraving the outer surface of the anilox roll. It will be clear that a person skilled in the art will be able to use future techniques that work in a similar way as a laser, for carrying out the method according to the invention.

The method according to the invention comprises laser engraving the outer surface of the anilox roll with a laser spot that is formed with the laser source. The laser and its laser spot are able to focus the intensity of the beam to a small position on the anilox roll. This allows tooling the anilox roll. The anilox roll may be used in the printing industry.

The method according to an embodiment of the invention may comprise applying an optical guide in the light path of the laser for enabling the laser spot to execute a reciprocal movement in the longitudinal direction of the anilox roll of which the outer surface is to be tooled. The reciprocal movement leads to a repetitive movement in the position of the laser spot on the anilox roll surface. The reciprocal movement preferably causes a shift of the laser spot on the anilox roll in a direction that is mainly parallel to a longitudinal axis of the anilox roll. This creates the ability to execute repetitive movement of the laser spot on the surface to be tooled, in a surprisingly simple fashion.

In an embodiment, during manufacturing, the anilox roll rotates with a constant speed. Moreover, when a pattern is made with a course spiraling over its surface, the laser source and anilox roll are operated to move relative to one another in the longitudinal direction of the anilox roll. Then, the laser spot moves relative to the anilox roll surface with three components: a circumferential component which is constant, a longitudinal movement as caused by the longitudinal movement of the laser source relative to the anilox roll and the above mentioned reciprocal movement.. A generally even evaporation of surface material of the surface of the anilox roll is obtained thereby. This allows forming a generally uniform channel, e.g. having one of the shapes shown in Fig.s 4, 5A, 5B and 6. Preferably, the depth and width of the channel will be generally constant throughout the whole formed channel. Further the channel will have a generally U-shaped cross-section.

In an embodiment the optical guide is implemented by an acousto-optical modulator, AOM, which is known from the prior art. The reciprocal movement is caused by supplying a varying current to the AOM. With this, a deflection in the trajectory of the laser beam may be caused, resulting in movement of the laser spot. The varying current may be a sine like current, such as a well-known alternating current (AC). With this, a sine like reciprocal movement is generated. Supplying a varying current with a different wave form results in another pattern on the anilox roll, like the ones shown in Fig. 5A, 5B.

It is exceptionally advantageous to apply the method using a continuous laser. This enables the possibility to continuously rotate the anilox roll while reciprocally moving the laser spot over the surface. In combination with the rotating anilox roll, which may continuously rotate around its longitudinal axis, a wobbling track may be burned. This track is comparable to a track on a CD or DVD. The method of forming an outer surface that comprises such a wobbling groove, surrounded by walls that are left unburned, may advantageously be applied in the printing industry. Laser engraving is used here to form a channel that extends in a rotational direction of the anilox roll, wherein the channel forms the patterns, for example as shown in figs. 3A, 3B and 4 to 6.

Every time when the anilox roll rotates to the same position, the laser spot finished an integer number of full reciprocal movements. This guarantees the channel parts are parallel to each other on the surface of the anilox roll. I.e., the tangential speed (i.e., surface speed of the anilox roll, m/s) Va of the outer surface of the anilox roll satisfies the following equation:

$$(t2-t1)*Va=n*Lw, \text{[equation 1]},$$

wherein t1 and t2 are two adjacent time points (t2>t1) when the anilox roll turns to the same position, n is an integer and Lw is the length of a repetitive pattern on the circumferential direction of the anilox roll. The following equation is satisfied too:

$$t2-t1=n*\Delta t, \text{ [equation 2]}$$

wherein $\Delta t$ is the time for a full reciprocal movement of the laser spot.

When an anilox roll rotates to a position at time t1 and next time rotates to the same position at time t2, the reciprocal movement along the longitude of the anilox roll starting from t1, and the reciprocal movement along the longitude of the anilox roll starting from t2 does no overlap to each other and with a distance less than 12 $\mu$m, preferably 5 $\mu$m, even more preferably 2 $\mu$m or most preferably D=0 (i.e., engraving the patterns when 0<D<= 12 $\mu$m in Fig. 3A, or most preferably D=0 in Figs. 4 to 6). Or the above two reciprocal movements may have an overlap and the overlap part is smaller than 12$\mu$m, preferably smaller than 5$\mu$m, and even more preferably smaller than 2$\mu$m (i.e., engraving the patterns shown in Fig. 3B when -12 $\mu$m<D<0 $\mu$m or preferably -5 $\mu$m <=D < 0 $\mu$m or even more preferably -2 $\mu$m <=D <0 $\mu$m).

The shift/offset speed Vs of the reciprocal movements alongside the longitude of the anilox roll satisfies the following equation:

$$-12 \text{ μm} <= 2*((t2-t1)*Vs-A-Ww-Wb)<=12 \text{ μm, [equation 3]}$$

wherein A is the amplitude of the reciprocal movements, Ww is the width of a wall, Wb is the beam width of the laser (and/or the channel width) and t1 and t2 are two adjacent time points (t2>t1) when the anilox roll turns to the same position. More preferably, the shift/offset speed Vs of the reciprocal movements satisfies the following equation:

$$-5 \text{ μm} <= 2*((t2-t1)*Vs-A-Ww-Wb)<=5 \text{ μm, [equation 4]};$$

Even more preferably, the shift/offset speed Vs of the reciprocal movements satisfies the following equation:

$$-2 \text{ μm} <= 2*((t2-t1)*Vs-A-Ww-Wb)<=2 \text{ μm, [equation 5]};$$

Even more preferably, the shift/offset speed Vs of the reciprocal movements of laser spot satisfies the following equations:

$$0<= 2*((t2-t1)*Vs-A-Ww-Wb)<= 12 \text{ μm, [equation 6]};$$

$$0<= 2*((t2-t1)*Vs-A-Ww-Wb)<= 5 \text{ μm, [equation 7]};$$

or

$$0<= 2*((t2-t1)*Vs-A-Ww-Wb)<= 2 \text{ μm, [equation 8]}.$$

Most preferably, the shift/offset speed Vs of the reciprocal movements of laser spot satisfies the following equation:

$$2*((t2-t1)*Vs-A-Ww-Wb) = 0 \text{ [equation 9]}.$$

A further goal of the invention is obtained by an apparatus for forming an anilox roll for use in a printing process, comprising a supporting unit for supporting the cylinder shaped anilox roll and for rotating the anilox roll around a longitudinal axis. According to an aspect of the invention, the apparatus comprises an engraving unit with a laser source that is arranged for parallel movement with respect to a cylinder-axis of the anilox roll for engraving a structure on the outer surface of the anilox roll, especially in combination with a rotating anilox roll. The apparatus also comprises a driving unit for driving engraving settings of the engraving unit. The engraving settings are the driving parameters for the engraving, with which the engraving can be influenced. The person skilled in the art will understand how to set the engraving.

In another advantageous embodiment, the engraving unit comprises an optical guide that is positioned in the light trajectory of the laser, wherein the guide is movably connected to the engraving unit. This enables a mechanical reciprocal movement of the laser spot on the surface of the anilox roll, additional to the movement of the engraving unit as a whole. The extra movement is superimposed.

It is advantageous to provide the engraving unit with an objective lens. The lens is able to focus the laser. The lens may be the optical guide that performs a reciprocal movement.

It is possible to provide the engraving unit with two lasers or more lasers and/or with one or more beam-splitters. This way multiple parallel channels may be provided in the anilox roll simultaneously.

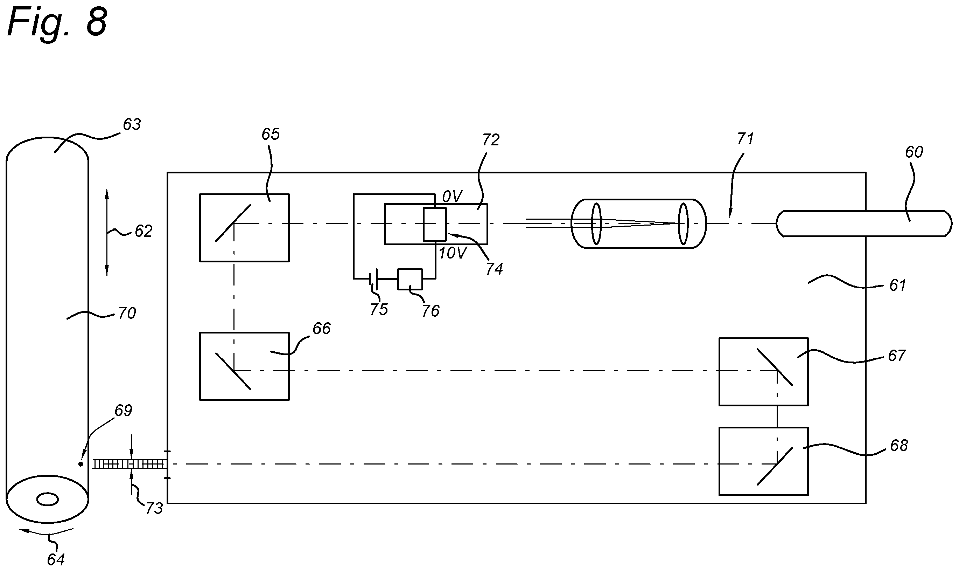

Fig. 8 shows a schematic view of an apparatus for forming the structure in an anilox roll according to an embodiment of the invention. Here a laser 60 is used. The laser 60 is part of an engraving unit 61. The engraving unit 61 is positioned along the longitudinal axis 62 of the anilox roll 63. The anilox roll 63 is only shown schematically. The figure is not drawn to scale. The engraving unit 61 is positioned on a frame (not shown), and the frame enables longitudinal movement of the engraving unit along the anilox roll 63 according to arrow 62. Suitable guiding means such as a guiding track may be applied.

The anilox roll 63 is positioned in a container that is supported on bearings and connected to the frame. In this way the anilox roll is able to rotate around its longitudinal axis according to arrow 64. The combination of both rotation around the axis, as well as movement along the axis enables tooling by engraving of the complete outer surface with the laser. The constructions for manufacturing, more specifically engraving the anilox roll according to the state of the art using these movements, enable tooling with accuracies of less than 1 micrometer. The method allows forming channels on the surface of the anilox roll. Material in the channels is evaporated, whilst the wall parts remain.

The engraving unit 61 produces a laser beam. The laser beam can be concentrated in a spot 69 on the outer surface 70 of the anilox roll 63 by means of known optical guides 65-68, which in this embodiment are formed by four corner mirrors. At the position where the spot is formed a certain amount of heat is concentrated such that a piece of material of the outer surface of the anilox roll will evaporate. This material may be a ceramic composition, such as a chromium oxide. A person skilled in the art will be familiar with the different compositions and/or compounds.

By focusing the laser spot 69 it is possible to evaporate a part of the outer surface of the anilox roll. In a preferred embodiment of the invention a continuous laser 60 is used. Synchronizing the pulses of the laser with rotational and longitudinal movements is more continuous. More specifically, it is possible to form a continuous track of evaporated material on the anilox roll 63 by using a continuous laser together with continuous movements of the roll and/or engraving unit, thereby forming a channel. It is possible to form a continuous track at a high speed. The speed is limited by the power of the laser only.

In a further embodiment of the invention, the beam 71 of the laser 60 is influenced by an optical guide, like an AOM, in the trajectory between the laser 60 and the spot 69. The optical guide 72 may enforce a reciprocal movement 73 of the spot over the surface to be engraved. As a result, the spot will repeatedly execute an identical movement, preferably with a continuous speed. This movement, together with the rotation (e.g., continuous rotation) of the anilox roll, may lead to a continuously changing location of the spot. Preferably, the reciprocal movement results in a shift 73 of the spot in a direction that is parallel to the longitudinal axis of the anilox roll. Such a change in combination with a continuous laser may for example be used for forming a pattern of channels according to Figs. 3 to 6.

Preferably, the reciprocal movement of the laser spot is a sine wave, saw tooth or triangle like movement. The movement may be governed mechanically or electronically. In a preferred embodiment shown in Fig. 8, a combination of an AOM 74 on the one hand, and a voltage supplied by a power supply 75 on the other hand, is used. The voltage is supplied to the AOM 74. The optical guide 72 and more specifically the AOM 74 will function as a generation device for the reciprocal movement of the laser spot. A voltage is supplied to the AOM 74 for causing a change in the trajectory of the beam 71, more specifically in an eventual shift of the spot. The voltage supplied is, for instance, repetitive, resulting in the movement of the spot also being repetitive. A control unit 76 is, for example, provided in the electrical connection between the AOM 74 and the supply 75. The control unit 76 is capable of adjusting the voltage supplied. The control unit 76 may be connected to an external controller for synchronizing the AOM control voltage with the rotation 64 (which may be constant) of the anilox roll 63 and movement 62 along the anilox roll 63 of the engraving unit 61 as a whole.

The change in voltage is for example characterized by parameters such as amplitude and frequency. These two parameters may be related to the amount of shift and the repetition of the reciprocal movement, respectively.

Other embodiments of generator devices and optical guides are also possible. It is also possible to make use of a moving mirror. In another embodiment, an interference effect may be used for generating the reciprocal movement of the spot.

Variations on the embodiments of the different profiles are imaginable, without diverting from the main notion of the invention. It may be clear that the invention is described by using preferred embodiments. The invention is not intended to be limited to these embodiments.

Although the invention is described and will be described with respect to preferred embodiments, it will be clear that within the scope of the invention, multiple and different embodiments are possible. It is a goal of this application to protect the embodiments described, the embodiments indicated by the claims, as well as equivalents thereof. The person skilled in the art will know that the advantages of the invention are experimentally known, and be able to construct different embodiments. It is an intention of the inventor to also protect these embodiments with this application.

More specifically, the skilled person is able to form restrictions on the surface of an anilox roll in accordance with the disclosure in this application that allows obtaining one or more of the advantages. Functional protection should therefore be allowed.

**EP 3 762 234 B1**

**Claims**

1. An anilox roll having a cylindrical shape and a pattern provided on its outer surface for transferring a fluid in a printing apparatus,

   wherein said pattern comprises at least one channel (302a, 302b; 312a, 312b; 402a, 402b) for receiving the fluid, distributing the fluid over the cylinder and transferring the fluid, the channel (302a, 302b; 312a, 312b; 402a, 402b) having a course (602) extending in a straight course direction with an angle to a circumferential direction of the anilox roll (104),
   each channel (302a; 312a; 402a) being limited by a first wall (301a; 311a; 401a) and a second wall (301b; 311b; 401b) opposing said first wall (301a; 311a; 401a),
   said first wall (301a; 311a; 401a) having a meandering shape which touches a first straight virtual line (303b; 313b; 403b) at one or more points but does not intersect said first straight virtual line (303b; 313b; 403b), said first virtual line (303b; 313b; 403b) being at the channel side and parallel to said course direction;
   said second wall (301b; 311b; 401b) having a meandering shape which touches a second straight virtual line (303c; 313c; 403c) at one or more points but does not intersect said second straight virtual line (303c; 313c; 403c), said second straight virtual line (303c; 313c; 403c) being at the channel side and being parallel to said first straight virtual line (303b; 313b; 403b);
   said first straight virtual line (303b; 313b; 403b) and said second straight virtual line (303c; 313c; 403c) substantially coinciding with each other.

2. The anilox roll of claim 1, wherein the first wall (301a; 311a; 401a) and the second wall (301b; 311b; 401b) of each channel (302a; 312a; 402a) are meandering in parallel to each other without phase difference.

3. The anilox roll of claim 2, wherein each channel (302a; 312a; 402a) as well as the first wall (301a; 311a; 401a) and the second wall (301b; 311b; 401b) have a wave shape with a repetitive pattern, such as a sine-like wave, a saw tooth shaped wave or a triangle shaped wave.

4. The anilox roll of any of the preceding claims, wherein each channel (302a; 312a; 402a) is arranged to be suitable for halftone printing and full tone printing.

5. The Anilox roll of any of the preceding claims, wherein each channel (302a; 312a; 402a) has a U or V shaped cross section when a cross section line is perpendicular to the straight virtual lines (303b, 303c; 313b, 313c; 403b, 403c).

6. The Anilox roll of any of the preceding claims, wherein each channel has a channel width which is the same along its entire length.

7. The Anilox roll according to any of the preceding claims, wherein the first and second walls have a wall width in a range of 1-10 $\mu$m, preferably in a range of 1-5 $\mu$m, most preferably in a range of 1-3 $\mu$m.

8. The Anilox roll according to any of the preceding claims, wherein the channel covers substantially the whole effective surface of the anilox roll.

9. A printing apparatus comprising a printing device having a supply for a substrate to be printed and a supply for ink, wherein the printing device comprises an anilox roll according to any of the preceding claims mounted in a bearing.

10. The printing apparatus according to claim 9, wherein the printing apparatus is a flexographic apparatus.

11. Method for forming an anilox roll (5, 63), comprising supplying a cylinder of the anilox roll that has an outer surface (70, 100) to be tooled, supplying at least a continuous laser source (60) and laser engraving the outer surface of the anilox roll with a laser spot (69) that is formed by the continuous laser source for obtaining a tooled anilox roll, wherein the method further comprises applying an optical guide (72) in the light path of the laser for enabling the laser spot to move reciprocally (73) on the outer surface to be tooled,

    the reciprocal movement (73) causing a shift of the laser spot (69) on the anilox roll (5, 63) in a direction that is parallel to a longitudinal axis (62) of the anilox roll, while continuously rotating the anilox roll (63) and moving the laser source parallel to said longitudinal axis, such that the laser source (60) engraves the complete outer surface (70, 100) and thereby forms a channel (24) in the outer surface of the anilox roll,

wherein said anilox roll as an anilox roll as defined in any of the claims 1-8.

12. Apparatus arranged to form an anilox roll (5, 63) to be used in a printing process, comprising a supporting unit arranged to support the cylinder shaped anilox roll and to rotate the anilox roll around a longitudinal axis, an engraving unit (61) that is arranged for parallel movement with respect to a cylinder-axis (62) of the anilox roll to engrave a structure on the outer surface (70, 100) of the anilox roll, and a driving unit arranged to drive the engraving settings of the engraving unit (61), wherein the engraving unit comprises at least a continuous laser source (60) arranged to laser engrave the outer surface of the anilox roll (5, 63) with a laser spot (69), wherein the engraving unit further comprises an optical guide (72) in the light path of the laser source arranged to reciprocally move the laser spot (69) in a repetitive way on the outer surface of the anilox roll,
wherein the optical guide is arranged to cause a shift of the laser spot (69) with the reciprocal movement on the anilox roll (5, 63) in a direction that is mainly parallel to a longitudinal axis (62) of the anilox roll, the supporting unit being arranged to continuously rotate the anilox roll (63) and the apparatus being arranged to continuously move the laser source parallel to said longitudinal axis, such that the laser source (60) engraves the complete outer surface (70, 100) and thereby forms a channel (24) in the outer surface of the anilox roll, **characterized in that** the apparatus is arranged to perform the method of claim 11.

13. Apparatus according to claim 12, wherein the optical guide (72) is implemented as an acoustic-optical modulator.

14. Apparatus according to claim 13, wherein the optical guide (72) is connected to the engraving unit (61) by means of a movement unit, and wherein the movement unit is arranged for enabling the laser spot (69) to move reciprocally (73).

### Patentansprüche

1. Anilox-Walze mit einer zylindrischen Form und einem auf ihrer Außenfläche vorgesehenen Muster zum Übertragen eines Fluids in einer Druckvorrichtung,

wobei das Muster mindestens einen Kanal (302a, 302b; 312a, 312b; 402a, 402b) zum Aufnehmen des Fluids, Verteilen des Fluids über den Zylinder und Übertragen des Fluids umfasst, wobei der Kanal (302a, 302b; 312a, 312b; 402a, 402b) einen Verlauf (602) aufweist, der sich in einer geraden Verlaufsrichtung mit einem Winkel zu einer Umfangsrichtung der Anilox-Walze (104) erstreckt, wobei jeder Kanal (302a; 312a; 402a) durch eine erste Wand (301a; 311a; 401a) und eine zweite Wand (301b; 311b; 401b), die der ersten Wand (301a; 311a; 401a) gegenüberliegt, begrenzt ist, wobei die erste Wand (301a; 311a; 401a) eine mäandrierende Form aufweist, die eine erste gerade virtuelle Linie (303b; 313b; 403b) an einem oder mehreren Punkten berührt, aber die erste gerade virtuelle Linie (303b; 313b; 403b) nicht schneidet, wobei die erste virtuelle Linie (303b; 313b; 403b) an der Kanalseite und parallel zu der Verlaufsrichtung ist;
wobei die zweite Wand (301b; 311b; 401b) eine mäandrierende Form aufweist, die eine zweite gerade virtuelle Linie (303c; 313c; 403c) an einem oder mehreren Punkten berührt, aber die zweite gerade virtuelle Linie (303c; 313c; 403c) nicht schneidet, wobei die zweite gerade virtuelle Linie (303c; 313c; 403c) an der Kanalseite und parallel zu der ersten geraden virtuellen Linie (303b; 313b; 403b) ist;
wobei die erste gerade virtuelle Linie (303b; 313b; 403b) und die zweite gerade virtuelle Linie (303c; 313c; 403c) im Wesentlichen miteinander zusammenfallen.

2. Anilox-Walze nach Anspruch 1, wobei die erste Wand (301a; 311a; 401a) und die zweite Wand (301b; 311b; 401b) jedes Kanals (302a; 312a; 402a) parallel zueinander ohne Phasendifferenz mäandrieren.

3. Anilox-Walze nach Anspruch 2, wobei jeder Kanal (302a; 312a; 402a) sowie die erste Wand (301a; 311a; 401a) und die zweite Wand (301b; 311b; 401b) eine Wellenform mit einem sich wiederholenden Muster aufweisen, wie etwa eine sinusähnliche Welle, eine sägezahnförmige Welle oder eine dreieckförmige Welle.

4. Anilox-Walze nach einem der vorhergehenden Ansprüche, wobei jeder Kanal (302a; 312a; 402a) angeordnet ist, um für Halbtondrucken und Volltondrucken geeignet zu sein.

5. Anilox-Walze nach einem der vorhergehenden Ansprüche, wobei jeder Kanal (302a; 312a; 402a) einen U- oder V-förmigen Querschnitt aufweist, wenn eine Querschnittslinie senkrecht zu den geraden virtuellen Linien (303b, 303c; 313b, 313c; 403b, 403c) ist.

**6.** Anilox-Walze nach einem der vorhergehenden Ansprüche, wobei jeder Kanal eine Kanalbreite aufweist, die entlang seiner gesamten Länge gleich ist.

**7.** Anilox-Walze nach einem der vorhergehenden Ansprüche, wobei die erste und die zweite Wand eine Wandbreite in einem Bereich von 1-10 $\mu$m, vorzugsweise in einem Bereich von 1-5 $\mu$m, am meisten bevorzugt in einem Bereich von 1-3 $\mu$m aufweisen.

**8.** Anilox-Walze nach einem der vorhergehenden Ansprüche, wobei der Kanal im Wesentlichen die gesamte wirksame Oberfläche der Anilox-Walze bedeckt.

**9.** Druckvorrichtung, umfassend eine Druckeinrichtung mit einer Zufuhr für ein zu bedruckendes Substrat und einer Zufuhr für Tinte, wobei die Druckeinrichtung eine Anilox-Walze nach einem der vorhergehenden Ansprüche umfasst, die in einem Lager montiert ist.

**10.** Druckvorrichtung nach Anspruch 9, wobei die Druckvorrichtung eine Flexodruckvorrichtung ist.

**11.** Verfahren zum Bilden einer Anilox-Walze (5, 63), umfassend Zuführen eines Zylinders der Anilox-Walze, der eine zu bearbeitende Außenfläche (70, 100) aufweist, Zuführen mindestens einer kontinuierlichen Laserquelle (60) und Lasergravieren der Außenfläche der Anilox-Walze mit einem Laserfleck (69), der durch die kontinuierliche Laserquelle gebildet wird, zum Erhalten einer bearbeiteten Anilox-Walze, wobei das Verfahren ferner Anwenden einer optischen Führung (72) in dem Lichtpfad des Lasers zum Ermöglichen, dass sich der Laserfleck auf der zu bearbeitenden Außenfläche hin- und herbewegt (73), umfasst,

wobei die Hin- und Herbewegung (73) eine Verschiebung des Laserflecks (69) auf der Anilox-Walze (5, 63) in einer Richtung verursacht, die parallel zu einer Längsachse (62) der Anilox-Walze ist, während die Anilox-Walze (63) kontinuierlich gedreht wird und die Laserquelle parallel zu der Längsachse bewegt wird, so dass die Laserquelle (60) die gesamte Außenfläche (70, 100) graviert und dadurch einen Kanal (24) in der Außenfläche der Anilox-Walze bildet,
wobei die Anilox-Walze eine Anilox-Walze ist, wie in einem der Ansprüche 1-8 definiert.

**12.** Vorrichtung, die angeordnet ist, um eine Anilox-Walze (5, 63) zu bilden, die in einem Druckverfahren verwendet werden soll, umfassend eine Trägereinheit, die angeordnet ist, um die zylinderförmige Anilox-Walze zu tragen und die Anilox-Walze um eine Längsachse zu drehen, eine Gravureinheit (61), die für eine Parallelbewegung in Bezug auf eine Zylinderachse (62) der Anilox-Walze angeordnet ist, um eine Struktur auf der Außenfläche (70, 100) der Anilox-Walze zu gravieren, und eine Antriebseinheit, die angeordnet ist, um die Gravureinstellungen der Gravureinheit (61) anzutreiben, wobei die Gravureinheit mindestens eine kontinuierliche Laserquelle (60) umfasst, die angeordnet ist, um die Außenfläche der Anilox-Walze (5, 63) mit einem Laserfleck (69) zu lasergravieren, wobei die Gravureinheit ferner eine optische Führung (72) in dem Lichtpfad der Laserquelle umfasst, die angeordnet ist, um den Laserfleck (69) auf wiederholende Weise auf der Außenfläche der Anilox-Walze hin- und herzubewegen,
wobei die optische Führung angeordnet ist, um eine Verschiebung des Laserflecks (69) mit der Hin- und Herbewegung auf der Anilox-Walze (5, 63) in einer Richtung zu verursachen, die hauptsächlich parallel zu einer Längsachse (62) der Anilox-Walze ist, wobei die Trägereinheit angeordnet ist, um die Anilox-Walze (63) kontinuierlich zu drehen, und die Vorrichtung angeordnet ist, um die Laserquelle kontinuierlich parallel zu der Längsachse zu bewegen, so dass die Laserquelle (60) die gesamte Außenfläche (70, 100) graviert und dadurch einen Kanal (24) in der Außenfläche der Anilox-Walze bildet, **dadurch gekennzeichnet, dass** die Vorrichtung angeordnet ist, um das Verfahren nach Anspruch 11 durchzuführen.

**13.** Vorrichtung nach Anspruch 12, wobei die optische Führung (72) als ein akusto-optischer Modulator implementiert ist.

**14.** Vorrichtung nach Anspruch 13, wobei die optische Führung (72) mit der Gravureinheit (61) mittels einer Bewegungseinheit verbunden ist, und wobei die Bewegungseinheit zum Ermöglichen, dass sich der Laserfleck (69) hin- und herbewegt (73), angeordnet ist.

**Revendications**

**1.** Rouleau anilox ayant une forme cylindrique et un motif prévu sur sa surface extérieure pour transférer un fluide dans un appareil d'impression,

dans lequel ledit motif comprend au moins un canal (302a, 302b ; 312a, 312b ; 402a, 402b) pour recevoir le fluide, distribuer le fluide sur le cylindre et transférer le fluide, le canal (302a, 302b ; 312a, 312b ; 402a, 402b) ayant une trajectoire (602) qui s'étend dans une direction de trajectoire droite avec un angle par rapport à une direction circonférentielle du rouleau anilox (104),

chaque canal (302a ; 312a ; 402a) étant limité par une première paroi (301a ; 311a ; 401a) et une seconde paroi (301b ; 311b ; 401b) opposée à ladite première paroi (301a ; 311a ; 401a),

ladite première paroi (301a ; 311a ; 401a) ayant une forme sinueuse qui touche une première ligne virtuelle droite (303b ; 313b ; 403b) en un ou plusieurs points mais n'intersecte pas ladite première ligne virtuelle droite (303b ; 313b ; 403b), ladite première ligne virtuelle (303b ; 313b ; 403b) étant du côté du canal et parallèle à ladite direction de trajectoire ;

ladite seconde paroi (301b ; 311b ; 401b) ayant une forme sinueuse qui touche une seconde ligne virtuelle droite (303c ; 313c ; 403c) en un ou plusieurs points mais n'intersecte pas ladite seconde ligne virtuelle droite (303c ; 313c ; 403c), ladite seconde ligne virtuelle droite (303c ; 313c ; 403c) étant du côté du canal et étant parallèle à ladite première ligne virtuelle droite (303b ; 313b ; 403b)

ladite première ligne virtuelle droite (303b ; 313b ; 403b) et ladite seconde ligne virtuelle droite (303c ; 313c ; 403c) coïncidant sensiblement l'une avec l'autre.

2. Rouleau anilox selon la revendication 1, dans lequel la première paroi (301a ; 311a ; 401a) et la seconde paroi (301b ; 311b ; 401b) de chaque canal (302a ; 312a ; 402a) sont sinueuses parallèlement l'une à l'autre sans déphasage.

3. Rouleau anilox selon la revendication 2, dans lequel chaque canal (302a ; 312a ; 402a) ainsi que la première paroi (301a ; 311a ; 401a) et la seconde paroi (301b ; 311b ; 401b) ont une forme d'onde avec un motif répétitif, tel qu'une onde sinusoïdale, une onde en dents de scie ou une onde triangulaire.

4. Rouleau anilox selon l'une quelconque des revendications précédentes, dans lequel chaque canal (302a ; 312a ; 402a) est agencé pour être adapté à l'impression en demi-teintes et à l'impression en tons pleins.

5. Rouleau anilox selon l'une quelconque des revendications précédentes, dans lequel chaque canal (302a ; 312a ; 402a) a une section transversale en forme de U ou de V lorsqu'une ligne de section transversale est perpendiculaire aux lignes virtuelles droites (303b, 303c ; 313b, 313c ; 403b, 403c).

6. Rouleau anilox selon l'une quelconque des revendications précédentes, dans lequel chaque canal a une largeur de canal qui est la même sur toute sa longueur.

7. Rouleau anilox selon l'une quelconque des revendications précédentes, dans lequel les première et seconde parois ont une largeur de paroi dans une plage de 1 à 10 $\mu$m, de préférence dans une plage de 1 à 5 $\mu$m, de manière préférée entre toutes dans une plage de 1 à 3 $\mu$m.

8. Rouleau anilox selon l'une quelconque des revendications précédentes, dans lequel le canal couvre sensiblement toute la surface effective du rouleau anilox.

9. Appareil d'impression comprenant un dispositif d'impression ayant une alimentation pour un substrat à imprimer et une alimentation pour de l'encre, dans lequel le dispositif d'impression comprend un rouleau anilox selon l'une quelconque des revendications précédentes qui est monté dans un palier.

10. Appareil d'impression selon la revendication 9, dans lequel l'appareil d'impression est un appareil flexographique.

11. Procédé pour former un rouleau anilox (5, 63), comprenant la fourniture d'un cylindre du rouleau anilox qui a une surface extérieure (70, 100) à usiner, la fourniture d'au moins une source laser continue (60) et la gravure laser de la surface extérieure du rouleau anilox avec un point laser (69) qui est formé par la source laser continue pour obtenir un rouleau anilox usiné, dans lequel le procédé comprend en outre l'application d'un guide optique (72) dans le trajet lumineux du laser pour permettre au point laser de se déplacer de manière alternative (73) sur la surface extérieure à usiner,

le mouvement alternatif (73) provoquant un décalage du point laser (69) sur le rouleau anilox (5, 63) dans une direction qui est parallèle à un axe longitudinal (62) du rouleau anilox, tout en faisant tourner continuellement le rouleau anilox (63) et en déplaçant la source laser parallèlement audit axe longitudinal, de sorte que la source laser (60) grave la surface extérieure complète (70, 100) et forme ainsi un canal (24) dans la surface extérieure du rouleau anilox,
dans lequel ledit rouleau anilox est un rouleau anilox tel que défini dans l'une quelconque des revendications 1 à 8.

12. Appareil agencé pour former un rouleau anilox (5, 63) destiné à être utilisé dans un processus d'impression, comprenant une unité de support agencée pour supporter le rouleau anilox de forme cylindrique et pour faire tourner le rouleau anilox autour d'un axe longitudinal, une unité de gravure (61) qui est agencée pour un mouvement parallèle par rapport à un axe de cylindre (62) du rouleau anilox pour graver une structure sur la surface extérieure (70, 100) du rouleau anilox, et une unité d'entraînement agencée pour commander les paramètres de gravure de l'unité de gravure (61), dans lequel l'unité de gravure comprend au moins une source laser continue (60) agencée pour graver au laser la surface extérieure du rouleau anilox (5, 63) avec un point laser (69), dans lequel l'unité de gravure comprend en outre un guide optique (72) dans le trajet lumineux de la source laser agencé pour déplacer de manière alternative le point laser (69) de manière répétitive sur la surface extérieure du rouleau anilox,
dans lequel le guide optique est agencé pour provoquer un décalage du point laser (69) avec le mouvement alternatif sur le rouleau anilox (5, 63) dans une direction qui est principalement parallèle à un axe longitudinal (62) du rouleau anilox, l'unité de support étant agencée pour faire tourner continuellement le rouleau anilox (63) et l'appareil étant agencé pour déplacer continuellement la source laser parallèlement audit axe longitudinal, de sorte que la source laser (60) grave la surface extérieure complète (70, 100) et forme ainsi un canal (24) dans la surface extérieure du rouleau anilox, **caractérisé en ce que** l'appareil est agencé pour exécuter le procédé selon la revendication 11.

13. Appareil selon la revendication 12, dans lequel le guide optique (72) est mis en œuvre sous forme de modulateur acousto-optique.

14. Appareil selon la revendication 13, dans lequel le guide optique (72) est connecté à l'unité de gravure (61) au moyen d'une unité de mouvement, et dans lequel l'unité de mouvement est agencée pour permettre au point laser (69) de se déplacer de manière alternative (73).

# Fig. 1

# Fig 2a
Prior art

# Fig 2b
## Prior art

# Fig. 3A

## Fig. 3B

## Fig. 4

## Fig. 5A

D=0    D=0    D=0

## Fig. 5B

D=0    D=0    D=0

*Fig. 6*

*Fig. 7*

*Fig. 8*

EP 3 762 234 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 09082225 A
- WO 2009082225 A2
- EP 0644829 B1
- WO 2009082225 A

**Non-patent literature cited in the description**

- **PROF. K.-H. MEYER**. Technik Des Flexodrucks. 2006, 71